# EUROPEAN PATENT APPLICATION

(11) **EP 4 018 802 A1**
(43) Date of publication of application: **29.06.2022**
(21) Application number: 20876278.1
(22) Date of filing: 16.10.2020
(51) Int. Cl.: A01D 34/00, G05D 1/02

(54) **AUTONOMOUSLY MOVING LAWN MOWING SYSTEM, AUTONOMOUSLY MOVING LAWN MOWER AND OUTDOOR AUTONOMOUSLY MOVING DEVICE**

(30) Priority: 18.10.2019 CN 201910992552; 31.12.2019 CN 201911409433
(71) Applicant: Nanjing Chervon Industry Co., Ltd., Nanjing, Jiangsu 211106 (CN)
(72) Inventor: CHEN, Weipeng, Nanjing, Jiangsu 211106 (CN); YANG, Dezhong, Nanjing, Jiangsu 211106 (CN)
(74) Representative: Sun, Yiming
(86) International application number: PCT/CN2020/121378
(87) International publication number: WO 2021/073587

(57) **Abstract**

Provided is a self-moving mowing system. The system includes: an actuating mechanism including a mowing assembly configured to achieve a mowing function and a moving assembly configured to achieve a moving function; an image acquisition module capable of acquiring a real-time image of a mowing area; a display module configured to display the real-time image or a simulated scene image generated according to the real-time image; a receiving module configured to receive an instruction input by a user; an obstacle generation module configured to generate, according to the instruction input by the user, a first virtual obstacle identifier so as to form a first fusion image; and a control module electrically connected or communicatively connected to a sending module, where the control module is configured to control the actuating mechanism to avoid the first virtual obstacle identifier in the first fusion image.

## Description

This application claims priority to Chinese Patent Application No. 201910992552.8 filed October 18, 2019 and Chinese Patent Application No. 201911409433.1 filed December 31, 2019, the disclosures of which are incorporated herein by reference in their entireties.

### TECHNICAL FIELD

The present application relates to an outdoor power tool, for example, to a self-moving mowing system, a self-moving mower and an outdoor self-moving device.

### BACKGROUND

A self-moving mowing system, as an outdoor mowing tool, does not require the user to operate for a long time, and thus is favored by the user due to its intelligence and convenience. In the mowing process of the traditional self-moving mowing system, the mowing area often has obstacles, such as trees and stones. The obstacles not only affect the moving track of the self-moving mowing system, but also easily damage the self-moving mowing system when colliding with the system many times. Moreover, the traditional self-moving mowing system cannot detect an area that the user does not want to mow within the mowing area, such as an area in which flowers and plants are planted, so that the area that the user does not expect to mow may be mowed mistakenly, which cannot meet the mowing needs of the user. Other common outdoor moving devices, such as a snowplow, also have the above problems.

### SUMMARY

The present application provides a self-moving mowing system, in which a simulated scene image or a real-time image of an actuating mechanism is displayed, so that a user can add an obstacle identifier on the simulated scene image or the real-time image to control the self-moving mowing system to avoid an obstacle area and can intuitively acquire the working condition of the self-moving mowing system.

An embodiment of the present application provides a self-moving mowing system. The system includes an actuating mechanism, including a mowing assembly configured to achieve a mowing function and a moving assembly configured to achieve a moving function; a housing configured to support the actuating mechanism; an image acquisition module capable of acquiring a real-time image comprising at least part of a mowing area and at least one obstacle located within the mowing area; a display module electrically or communicatively connected to the image acquisition module, where the display module is configured to display the real-time image or a simulated scene image generated according to the real-time image; a boundary generation module configured to generate a first virtual boundary corresponding to a mowing boundary in the real-time image by calculating characteristic parameters so as to form the first fusion image; a receiving module configured to receive information input by a user of whether the first virtual boundary in the first fusion image needs to be corrected; a correction module configured to receive, when the user inputs information that the first virtual boundary needs to be corrected, a user instruction to correct the first virtual boundary to generate a second virtual boundary in the real-time image or the simulated scene image so as to form a second fusion image; a sending module configured to send information of the first fusion image that does not need to be corrected or information of the corrected second fusion image; and a control module electrically or communicatively connected to the sending module, and is configured to control the actuating mechanism to operate within the first virtual boundary or the second virtual boundary.

Optionally, the receiving module is arranged outside the actuating mechanism, and the receiving module includes any one or more of mobile devices such as a keyboard, a mouse, a microphone, a touch screen, a remote controller and/or a handle, a camera, a laser radar, and a mobile phone.

Optionally, the receiving module is also configured to receive a first virtual obstacle identifier added by the user, and the actuating mechanism is controlled to avoid an actual virtual obstacle corresponding to the first virtual obstacle identifier during moving.

Optionally, the receiving module is also configured to receive a first moving path added by the user, and the actuating mechanism is controlled to move and operate in the second virtual boundary according to the first moving path.

An embodiment provides a self-moving mower. The self-moving mower includes a main body, including a housing; a mowing element connected to the main body and configured to trim vegetation; an output motor configured to drive the mowing element; road wheels connected to the main body; a drive motor configured to drive the road wheels to rotate; an image acquisition module capable of acquiring a real-time image including at least part of a mowing area and at least one obstacle located within the mowing area, and configured to transmit the real-time image to a display module to display the real-time image or a simulated scene image generated according to the real-time image; and a control module capable of receiving an instruction input by a user to generate a virtual obstacle identifier corresponding to the at least one obstacle in the real-time image or the simulated scene image so as to form a first fusion image, and configured to control an actuating mechanism to avoid the at least one obstacle corresponding to the virtual obstacle identifier in the first fusion image.

An embodiment provides a self-moving mowing system. The system includes an actuating mechanism, including a mowing assembly configured to achieve a mowing function and a moving assembly configured to achieve a moving function; a housing configured to support the actuating mechanism; an image acquisition module capable of acquiring a real-time image including at least part of a mowing area and at least part of a mowing boundary; a display module electrically or communicatively connected to the image acquisition module, where the display module is configured to display the real-time image or a simulated scene image generated according to the real-time image; a boundary generation module configured to generate a first virtual boundary corresponding to a mowing boundary in the real-time image by calculating characteristic parameters so as to form the first fusion image; the sending module configured to transmit the first fusion image; and the control module electrically or communicatively connected to the sending module, and is configured to control the actuating mechanism to operate within the first virtual boundary.

Optionally, the self-moving mowing system further includes a positioning module. The positioning module includes one or a combination of a global positioning system (GPS) unit, an inertial measurement unit (IMU) and a displacement sensor, and is configured to acquire a real-time position of the actuating mechanism, and control and adjustment of the moving and mowing of the actuating mechanism is achieved by analyzing real-time positioning data of the actuating mechanism.

To achieve the above purpose of the present application, the display module includes a projection device and an interactive interface, the interactive interface is generated by projection of the projection device, and the simulated scene image or the real-time image is displayed by the interactive interface.

Optionally, the self-moving mowing system further includes a guide channel setting module. The guide channel setting module is configured to receive a virtual guide channel between a first virtual sub-mowing area and a second virtual sub-mowing area set by the user, and the virtual guide channel is configured to guide the actuating mechanism in a moving path between a first sub-mowing area corresponding to the first virtual sub-mowing area and a second sub-mowing area corresponding to the second virtual sub-mowing area.

An embodiment of the present application provides an outdoor self-moving device. The device includes: an actuating mechanism including a moving assembly configured to achieve a moving function and a working assembly configured to achieve a preset function; a housing configured to support the actuating mechanism; an image acquisition module capable of acquiring a real-time image including at least part of a working area and at least part of a working boundary; a display module electrically or communicatively connected to the image acquisition module, where the display module is configured to display the real-time image or a simulated scene image generated according to the real-time image; a boundary generation module configured to generate a first virtual boundary corresponding to the working boundary in the real-time image by calculating characteristic parameters so as to form the first fusion image; a receiving module configured to receive information input by a user of whether the first virtual boundary in the first fusion image needs to be corrected; a correction module configured to receive, when the user inputs information that the first virtual boundary needs to be corrected, a user instruction to correct the first virtual boundary to generate a second virtual boundary in the real-time image or the simulated scene image so as to form a second fusion image; a sending module configured to send information of the first fusion image that does not need to be corrected or information of the corrected second fusion image; and the control module electrically or communicatively connected to the sending module, and configured to control the actuating mechanism to operate within the first virtual boundary or the second virtual boundary.

An embodiment provides an outdoor self-moving device. The device includes: an actuating mechanism including a moving assembly configured to achieve a moving function and a working assembly configured to achieve a preset function; a housing configured to support the actuating mechanism; an image acquisition module capable of acquiring a real-time image including at least part of a working area and at least part of a working boundary; a display module electrically or communicatively connected to the image acquisition module, where the display module is configured to display the real-time image or a simulated scene image generated according to the real-time image; a boundary generation module configured to generate a first virtual boundary corresponding to the working boundary in the real-time image by calculating characteristic parameters so as to form the first fusion image; a sending module configured to transmit the first fusion image; and the control module electrically or communicatively connected to the sending module, and configured to control the actuating mechanism to operate within the first virtual boundary.

### BRIEF DESCRIPTION OF DRAWINGS

FIG. 1 is a structure diagram of an actuating mechanism of a self-moving mowing system according to the present application;
FIG. 2 is a schematic diagram showing the connection between the actuating mechanism and a projection device of FIG. 1;
FIG. 3 is a partial schematic diagram of an internal structure of the actuating mechanism of FIG. 2;
FIG. 4 is a schematic diagram of a framework of the actuating mechanism of FIG. 1;
FIG. 5 is a schematic diagram of a framework of the self-moving mowing system of FIG. 1;
FIG. 6 is a schematic diagram of a mowing area according to a first implementation of the present application;
FIG. 7 is a schematic diagram of an interactive interface according to the first implementation of the present application;
FIG. 8 is schematic diagram of the interactive interface displaying a real-time image according to the first implementation of the present application;
FIG. 9 is a schematic diagram of the interactive interface displaying a first fusion image according to the first implementation of the present application;
FIG. 10 is a schematic diagram of the interactive interface displaying a second fusion image according to the first implementation of the present application;
FIG. 11 is a schematic diagram of an actuating mechanism coordinate system according to the first implementation of the present application;
FIG. 12 is a schematic diagram of a pixel coordinate system according to the first implementation of the present application;
FIG. 13 is a schematic diagram of a framework of a self-moving mowing system according to a second implementation of the present application;
FIG. 14 is a schematic diagram of a mowing area according to the second implementation of the present application;
FIG. 15 is a schematic diagram of a first fusion image according to the second implementation of the present application;
FIG. 16 is a schematic diagram of a framework of a self-moving mowing system according to a third implementation of the present application;
FIG. 17 is a schematic diagram of a mowing area according to the third implementation of the present application;
FIG. 18 is a schematic diagram of a first fusion image according to the third implementation of the present application;
FIG. 19 is a schematic diagram of a first fusion image according to the third implementation of the present application;
FIG. 20 is a schematic diagram of a second fusion image according to the third implementation of the present application;
FIG. 21 is a schematic diagram of a framework of a self-moving mowing system according to a fourth implementation of the present application;
FIG. 22 is a schematic diagram of a mowing area according to the fourth implementation of the present application;
FIG. 23 is a schematic diagram of a first fusion image according to the fourth implementation of the present application;
FIG. 24 is a schematic diagram of a first fusion image according to the fourth implementation of the present application;
FIG. 25 is a schematic diagram of a second fusion image according to the fourth implementation of the present application;
FIG. 26 is a schematic diagram of a virtual guide channel identifier according to the fourth implementation of the present application; and
FIG. 27 is a structure diagram of an outdoor self-moving device according to a fifth implementation of the present application.

### DETAILED DESCRIPTION

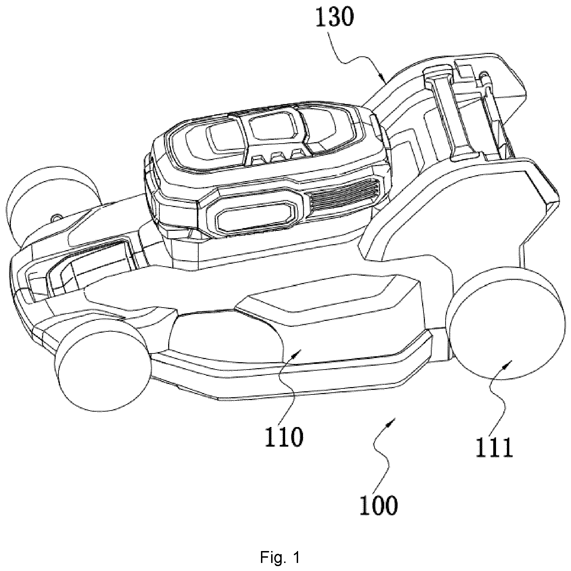

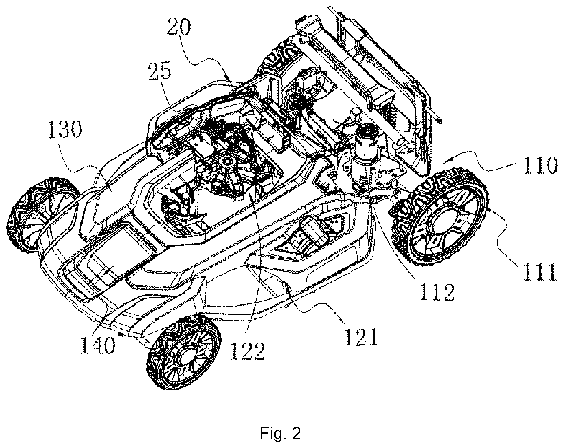

The present application provides a self-moving mowing system. Referring to FIGS. 1 to 3, the self-moving mowing system includes an actuating mechanism 100 configured to trim vegetation. The actuating mechanism 100 include at least a mowing assembly 120 configured to achieve a mowing function and a moving assembly 110 configured to achieve a moving function, and includes a main body 140 and a housing 130. The housing 130 packages and supports the main body 140, the mowing assembly 120 and the moving assembly 110. The mowing assembly 120 includes a mowing element 121 and an output motor 122. The output motor 122 is configured to drive the mowing element 121 to rotate so as to trim vegetation, and the mowing element 121 may be a blade or another element that can cut and trim the lawn. The moving assembly 110 includes at least one road wheel 111 and a drive motor 112 configured to drive the at least one road wheel 111, and the drive motor 112 provides a torque to the at least one road wheel 111. The mowing assembly 120 cooperates with the moving assembly 110, so that the self-moving mowing system can control the actuating mechanism 100 to move and operate on the vegetation. The actuating mechanism 100 is hardware of the self-moving mowing system which achieves a mowing function. Optionally, the actuating mechanism 100 is a self-moving mower.

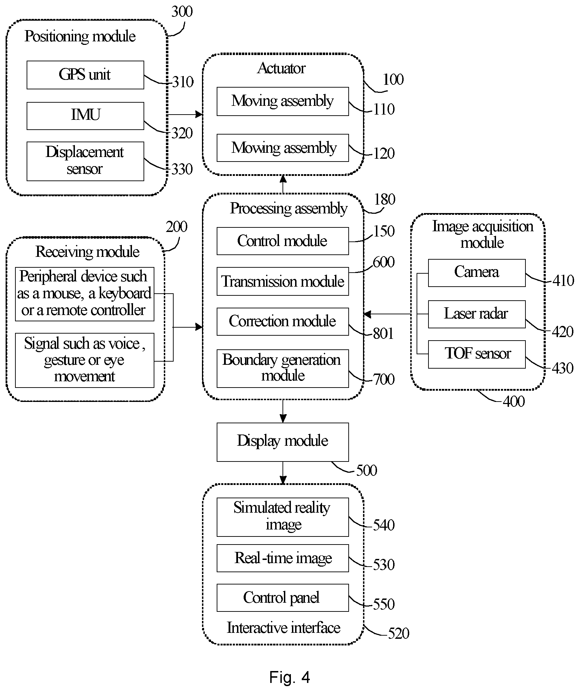

Referring to FIG. 4, the self-moving mowing system further includes a receiving module 200, a processing assembly 180 and a power supply 170. The receiving module 200 includes at least a receiving module 200 configured to receive a user instruction, and the receiving module 200 is configured to receive a input control instruction for the self-moving mowing system. The processing assembly 180 includes at least a control module 150 configured to control the self-moving mowing system to operate. The control module 150 is configured to control the drive motor 112 and the output motor 122 to operate according to the instruction and the operation parameters of the self-moving mowing system so as to control the actuating mechanism 100 to move within a corresponding working area and perform the mowing operation. The power supply 170 is configured to supply power to the moving assembly and the output assembly. Optionally, the power supply 170 is a pluggable battery pack mounted on the housing 130.

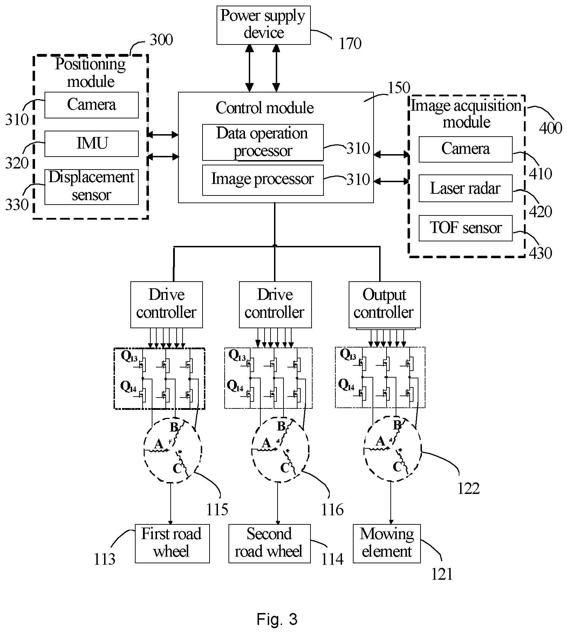

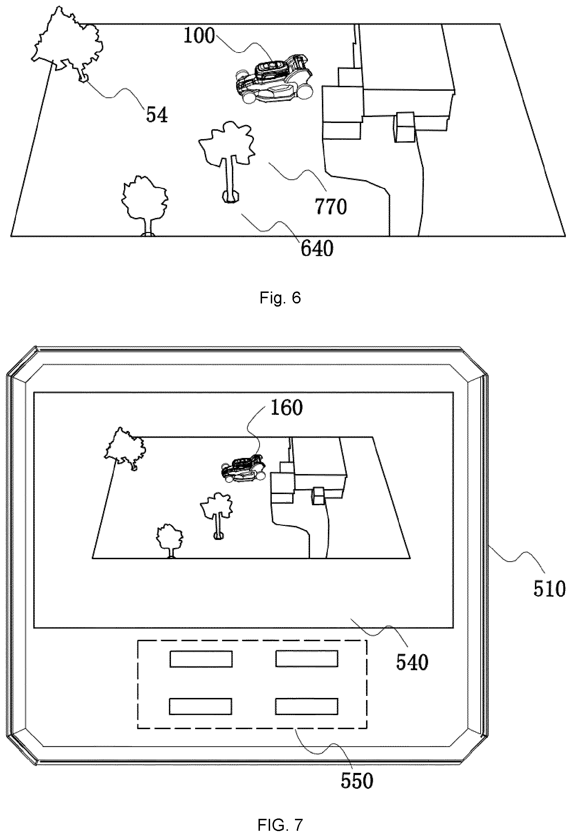

The self-moving mowing system includes an image acquisition module 400 and a display module 500. The processing assembly 180 includes a control module 150 configured to calculate image information. The display module 500 and the image acquisition module 400 are electrically or communicatively connected. The image acquisition module 400 is capable of acquiring a real-time image 530 including at least part of a mowing area and at least part of a mowing boundary, and the real-time image 530 of the corresponding mowing area and mowing boundary is displayed by the display module 500. Referring to FIGS. 3 and 6, the image acquisition module 400 includes at least one or a combination of a camera 410, a laser radar 420, and a time-of-flight (TOF) sensor 430. The image acquisition module 400 acquires surrounding environment information of the actuating mechanism 100 by the camera 410 and the laser radar 420, that is, acquires an environmental image of a to-be-operated mowing area and a mowing boundary by the camera 410 and acquires, by information reflected by a laser of the laser radar 420, characteristic parameters such as a shape, a slant distance, a distance with respect to the current actuating mechanism 100, and a position of an object within the mowing area and the mowing boundary. The control module 150 receives the image information of the mowing area and the mowing boundary acquired by the image acquisition module 400, and merges the characteristic parameters of the object in the image onto the image. The display module 500 displays the real-time image 530 of the mowing area and the mowing boundary acquired by the image acquisition module 400 for the user.

Referring to FIG. 3, to improve the position detection accuracy of the actuating mechanism 100, the self-moving mowing system further includes a positioning module 300 configured to acquire a position of the actuating mechanism 100, and achieve the control and adjustment of moving and mowing of the actuating mechanism 100 by analyzing real-time positioning data of the actuating mechanism 100. The positioning module 300 includes one or a combination of a global positioning system (GPS) unit 310, an inertial measurement unit (IMU) 320 and a displacement sensor 330, and is configured to acquire the position of the actuating mechanism 100. The GPS unit 310 is configured to acquire position information or position estimation of the actuating mechanism 100 and a start position of the moving of the actuating mechanism 100. The IMU 320 includes an accelerometer and a gyroscope for detecting offset information of the actuating mechanism 100 during the moving. The displacement sensor 330 may be arranged on the drive motor 112 or the road wheel 111 and configured to acquire displacement data of the actuating mechanism 100. The information acquired by the preceding multiple devices is combined and corrected, so that more accurate position information is acquired and a real-time position and a posture of the actuating mechanism 100 are acquired.

In another implementation, the control module 150 generates a simulated scene image 540 of the mowing area according to the image information and data information of the mowing area acquired by the image acquisition module 400. The boundary, the area and the obstacle of the mowing area are simulated in the simulated scene image 540, and an actuating mechanism model 160 is established. The actuating mechanism model 160 is displayed correspondingly in the simulated scene image 540 according to the position of the actuating mechanism 100 in the mowing area, so that the position and the operation state of the actuating mechanism model 160 are synchronized with the actual actuating mechanism 100.

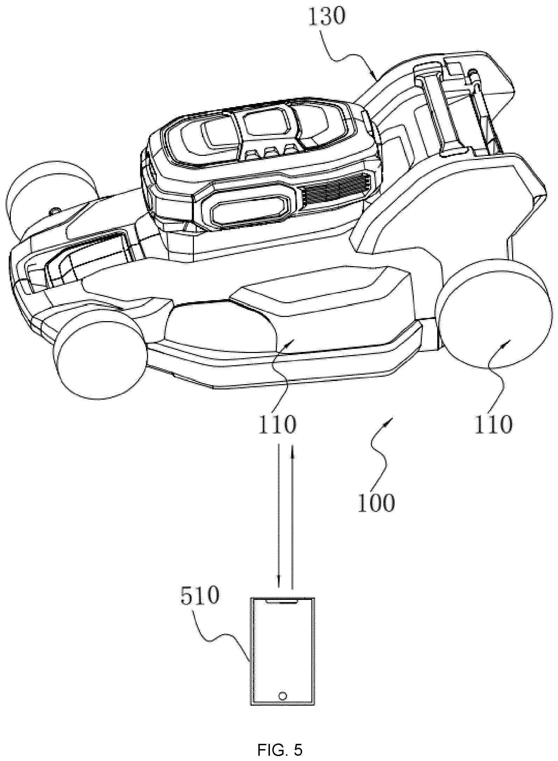

Referring to FIG. 5, the display module 500 is configured to project the simulated scene image 540. Exemplarily, the display module 500 projects to generate an interactive interface 520 by the projection device 510, and the interactive interface 520 displays the simulated scene image 540 of the actuating mechanism 100. The control module 150 controls the interactive interface 520 generated by the display module 500 to generate a control panel 550 for the user to operate while generating the simulated scene image 540, and the user directly controls the self-moving mowing system by the receiving module 200 or the interactive interface 520. The projection device 510 may be a mobile phone screen or a hardware display screen, which can be communicatively connected to the processing assembly 180 and is configured to display the simulated scene image 540 or the real-time image 530.

Referring to FIG. 3, the control module 150 includes a data operation processor 310 for processing data and an image processor 320 for image generation and scene modelling. The data operation processor 310 may be a central processing unit (CPU) or a microcontroller with a higher data processing speed, and the image processor 320 may be an independent graphics processing unit (GPU) module. When the actuating mechanism 100 is operating, the data operation processor 310 analyzes operation data and environmental data of the actuating mechanism 100, the image processor 320 models and generates corresponding simulated scene image information according to the above data, the projection device 510 generates the specific simulated scene image, and controls the simulated scene image to synchronously update the display content as a real-time operation state of the actuating mechanism 100 varies, so as to match an operation state of the actual actuating mechanism 100. The control module 150 further includes a storage configured to store data. The storage stores relevant algorithms of the self-moving mowing system and data information generated during the operation of the self-moving mowing system.

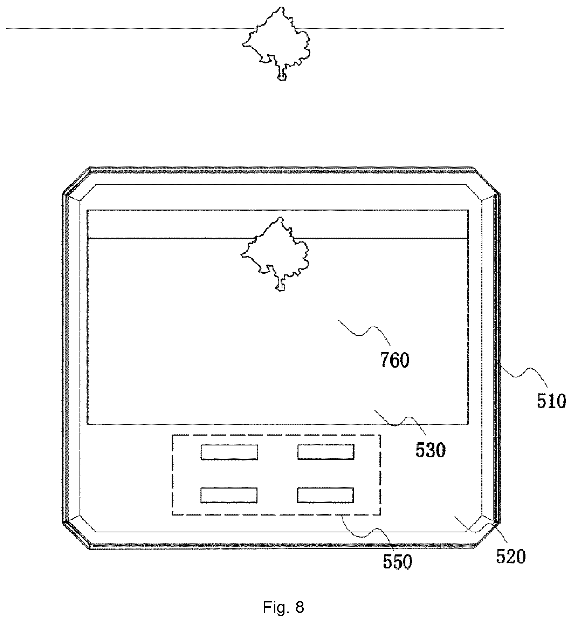

In a first implementation of the present application, the processing assembly 180 further includes a boundary generation module 700, a control module 150 and a sending module 600. Referring to FIGS. 7 and 8, a first virtual boundary 710 corresponding to a mowing boundary is generated in the real-time image 530 or the simulated scene image 540 by calculating characteristic parameters so as to form the first fusion image 720. The boundary generation module 700 is provided with a boundary analysis algorithm. A mowing boundary of a to-be-mowed area is analyzed by a color, a grass height, and a shape in the real-time image 530 or the simulated scene image 540, so that the first virtual boundary 710 is generated in a position corresponding to the mowing boundary in the real-time image 530 or the simulated scene image 540, and the first virtual boundary 710 is fused with the real-time image 530 or the simulated scene image 540 to generate the first fusion image 720. The first fusion image 720 includes the first virtual boundary 710 and a first virtual mowing area 760 defined by the first virtual boundary 710. The first virtual boundary 710 corresponds to an actual first boundary, and the first boundary is the mowing boundary detected by the boundary generation module 700 in the current environment. The object distribution and position in the first virtual mowing area 760 correspond to the object distribution and position in an actual first mowing area 770. The sending module 600 is electrically or communicatively connected to the control module 150. The sending module 600 transmits information of the first fusion image 720 to the control module 150. The information of the first fusion image 720 includes position information of the first virtual boundary 710. The control module controls the actuating mechanism to operate within the first virtual boundary, that is, the first virtual boundary 710 defines the first virtual mowing area 760. The control module 150 is configured to control, according to the position information of the first virtual boundary 710, the actuating mechanism 100 to mow in the actual first mowing area 770 corresponding to the first virtual mowing area 760, and control, according to the detected position of the actuating mechanism 100, the actuating mechanism 100 to operate only in the actual first boundary corresponding to the first virtual boundary 710.

The control module 150 is connected to the drive motor 112 and the output motor 122 and is configured to control the drive motor 112 and the output motor 122, so that the control module 150 controls the actuating mechanism 100 to move along a supplementary working path and to operate the mowing. Two road wheels 111 are provided, which are a first road wheel 113 and a second road wheel 114. The drive motor 112 is configured as a first drive motor 115 and a second drive motor 116. The control module 150 is connected to the first drive motor 115 and the second drive motor 116, and controls rotation speeds of the first drive motor 115 and the second drive motor 116 by a drive controller so as to control a moving state of the actuating mechanism 100. The processing assembly 180 analyzes the control instruction for the actuating mechanism 100 by acquiring the real-time position of the actuating mechanism 100 so as to achieve controlling the actuating mechanism 100 to operate within the first boundary. The control module 150 includes an output controller configured to control the output motor, and a drive controller configured to control the drive motor 112. The output controller is electrically connected to the output motor 122. The output controller controls the operation of the output motor, so that a cutting state of a cutting blade is controlled. The drive controller is connected to the drive motor 112 and is configured to control the drive motor 112, and the drive controller is communicatively connected to the drive motor 112 so that after the receiving module 200 receives a start-up instruction of the user or judges to start, the control module 150 analyzes the moving path of the actuating mechanism 100, and controls the drive motor 112 by the drive controller to drive the road wheel 111 to move. The control module 150 acquires the position information corresponding to the first virtual boundary 710, analyzes, according to position information of the actuating mechanism 100 detected by the positioning module 300, steering and speed information required by the actuating mechanism 100 to complete the operation within a preset first boundary, and controls the drive controller to control the rotation speed of the drive motor 112 so that the actuating mechanism 100 moves at a preset speed, and two wheels of the actuating mechanism 100 can be rotated at a differential speed so as to steer the actuating mechanism 100. The user may operate the displacement of the actuating mechanism 100 and the displacement of the image acquisition module 400 by the receiving module 200, so as to control the movement of the corresponding real-time image 530 or simulated scene image 540, so that the mowing area needs to be viewed by the user is displayed in the real-time image 530 or the simulated scene image 540 and the control instruction is added.

The receiving module 200 may be a peripheral device arranged outside the actuating mechanism 100, the peripheral device is communicatively connected to the actuating mechanism 100, the peripheral device receives the control instruction of the user and transmits the control instruction of the user to the processing assembly 180, and the processing assembly 180 analyzes the control instruction of the user to control the actuating mechanism 100 to execute. The peripheral device may be configured to be any one or more of mobile devices such as a keyboard, a mouse, a microphone, a touch screen, a remote controller and/or a handle, a camera 410, a laser radar 420, and a mobile phone. The user may directly and manually input command information by hardware such as the mouse, the keyboard, the remote controller, and the mobile phone, and may also input the command information by a signal such as a voice, a gesture and an eye movement. The camera 410 is configured to collect information characteristics of the eye movement or the hand movement of the user, so that the control instruction given by the user can be analyzed.

In another implementation, the projection device 510 adopts a virtual imaging technology, with interference and diffraction principles, to display images in a virtual reality (VR) glass device and an augmented reality (AR) device by the holographic projection, and correspondingly generate a virtual control panel 550 to achieve the instruction input by the communicatively connected peripheral device 310 such as the remote controller or the handle. Optionally, an interaction module 400 includes an action capture unit and an interaction positioning device. The action capture unit is configured to be a camera 410 and/or an infrared sensing device, and to capture an action of the user's hand or a controller. The interaction positioning device acquires a position of the projection device 510, analyzes the user's selection of the generated virtual control panel 550 by analyzing a displacement of the user's hand and a relative position of the projection device 510, and generates the corresponding control instruction.

In an implementation, the projection device 510 is mounted on the peripheral device, for example, in a case where the peripheral device 310 is selected to be a mobile phone, a computer, or a VR device, the projection device 510 is correspondingly to be a mobile phone screen, a computer screen, a curtain, or VR glasses.

The display module 500 has at least the projection device 510 and the interactive interface 520. The interactive interface 520 is displayed by the interactive interface 520, and the real-time image 530 or the simulated scene image 540 and the first fusion image 720 are displayed on the interactive interface 520. The projection device 510 may be implemented as a hardware display screen which may be an electronic device mounted on the peripheral device such as the mobile phone and the computer, or directly mounted on the actuating mechanism 100, or the processing assembly 180 is provided to be communicatively matched with multiple display screens and the user is allowed to select the projection object to display the corresponding real-time image 530 or simulated scene image 540.

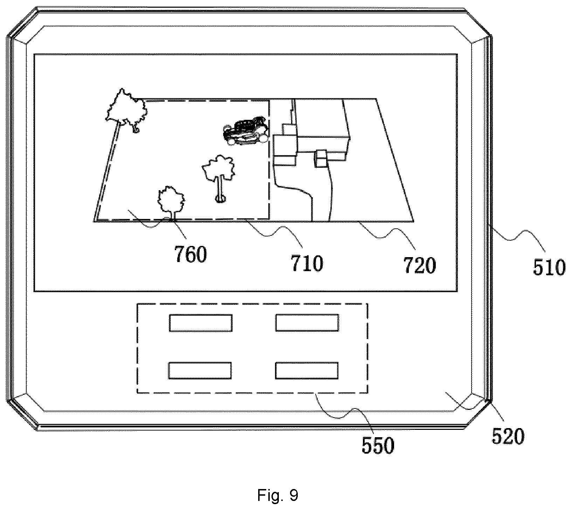

Referring to FIG. 9, the receiving module 200 may also generate the control panel 550 on the interactive interface 520 to receive the control instruction of the user by the control panel 550. The receiving module is configured to receive information input by the user of whether the first virtual boundary 710 in the first fusion image 720 needs to be corrected. In a case where the user selects to correct the information of the first fusion image 720, the user manually inputs an instruction to correct the first virtual boundary 710, thereby generating a second virtual boundary 730 designated by the user. After a boundary display module 500 calculates and generates the first fusion image 720, the display module 500 generates the interactive interface 520 by the projection device 510 to display the first fusion image 720 and the first virtual boundary 710. The receiving module 200 inquires whether the user needs to correct the first virtual boundary 710 by the interactive interface 520, the user selects to correct by the receiving module 200, and corrects the first virtual boundary 710 in the displayed first fusion image 720 by the control panel 550 in combination with the mowing boundary as actually needed. The processing assembly 180 further includes a correction module 801. The correction module 801 is configured to receive, when the user inputs information that the first virtual boundary 710 needs to be corrected, a user instruction to correct the first virtual boundary 710 to generate the second virtual boundary 730 in the real-time image 530 or the simulated scene image 540 so as to form a second fusion image 740.

The second fusion image 740 includes the second virtual boundary 730 and a second virtual mowing area defined by the second virtual boundary 730. The second virtual boundary 730 corresponds to the actual second boundary, and the second boundary is an actual to-be-mowed area corrected by the user. The object distribution and position in the second virtual mowing area correspond to the object distribution and position in an actual second mowing area. The control module controls the actuating mechanism to operate within the second virtual boundary, that is, the second virtual boundary defines the second virtual mowing area, the control module 150 is configured to control, according to position information of the second virtual boundary 730, the actuating mechanism 100 to mow in the actual second mowing area corresponding to the second virtual mowing area, and control, according to the detected position of the actuating mechanism 100, the actuating mechanism 100 to operate only within the actual second boundary corresponding to the second virtual boundary 730.

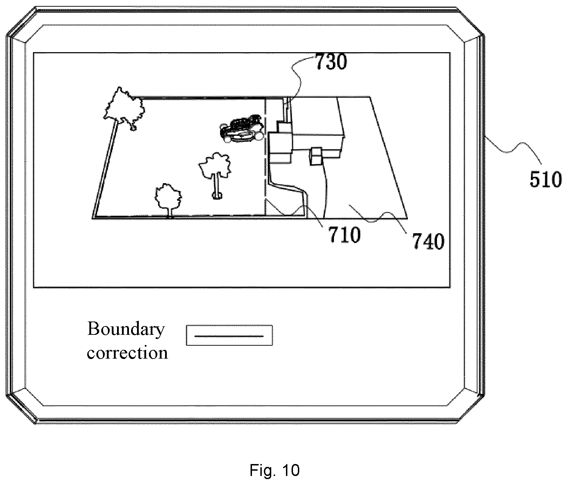

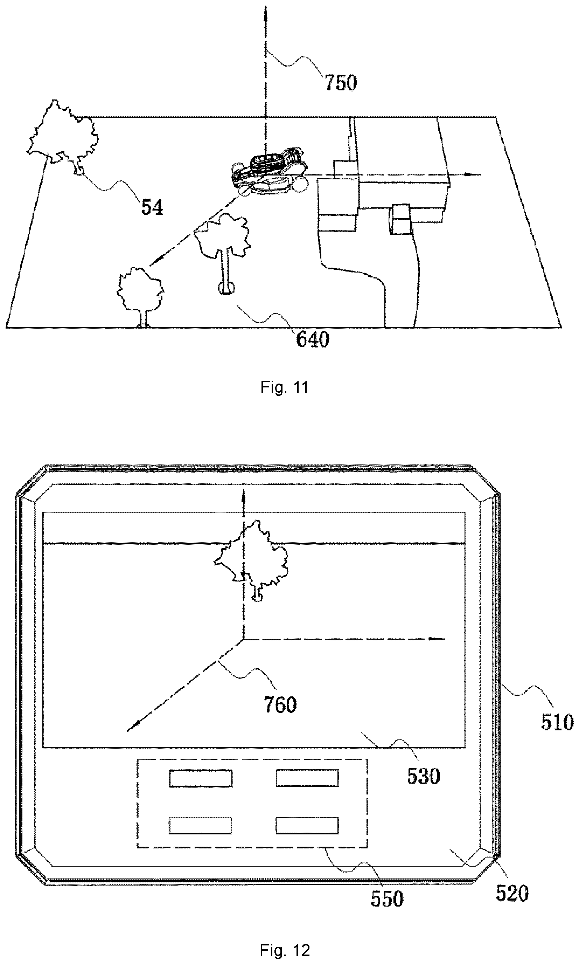

Referring to FIGS. 10 and 11, to identify a correction instruction of the user for the first fusion image 720 so as to generate the second fusion image 740, that is, to fuse the correction instruction of the user into the real-time image 530 or the simulated scene image 540, the data operation processor establishes, according to the first fusion image 720 and the position of the actuating mechanism 100 acquired by the image acquisition module 400 and the positioning module 300, an actuating mechanism coordinate system 750 configured to position and analyze the actuating mechanism 100 in the to-be-mowed environment. The data operation processor establishes a pixel coordinate system 760 for the generated first fusion image 720 so that pixels in the first fusion image 720 correspond to their pixel coordinates respectively, and analyzes the real-time image 530 or the simulated scene image 540. When the user selects a line segment or an area in the first fusion image 720 by the interactive interface 520, the user essentially selects a set of multiple pixels on the first fusion image 720. The correction module 801 calculates position information of the actual second boundary by analyzing the real-time position of the actuating mechanism 100 in the actuating mechanism coordinate system 750, a rotation angle of the image acquisition module 400, and a set of pixel coordinates corresponding to the second virtual boundary 730 selected by the user, thereby projecting the corrected second virtual boundary 730 selected by the user on the first fusion image 720 into the actual mowing area so as to acquire the second mowing area designated by the user, and fusing the second virtual boundary 730 into the real-time image 530 or the simulated scene image 540 so as to generate the second fusion image 740. The coordinates of the second virtual boundary 730 are fixed in the actuating mechanism coordinate system 750 and move in the pixel coordinate system 760 as the user controls the conversion of the real-time image 530 or the simulated scene image 540. By the user's correction, the error of the self-moving mowing system for automatically identifying and acquiring the mowing boundary can be corrected, so that the boundary of the mowing area can be set intuitively and accurately. The first virtual boundary 710 is identified and generated by the device such as an image sensor, so that the user only needs to correct the first virtual boundary 710 to generate the second virtual boundary 730, which facilitates the operation of the user to set the mowing boundary.

In another implementation, the user can directly set the first virtual boundary 710 on the real-time image 530 or the simulated scene image 540 by the receiving module 200, and a boundary identification module acquires the position information of the first virtual boundary 710 set by the user, projects the position information onto the actuating mechanism 100 coordinate, and detects the position of the actuating mechanism 100 by the positioning module 300 so as to control the actuating mechanism 100 to move on the first boundary corresponding to the first virtual boundary 710 by the control module 150, so that the user can quickly set the mow boundary.

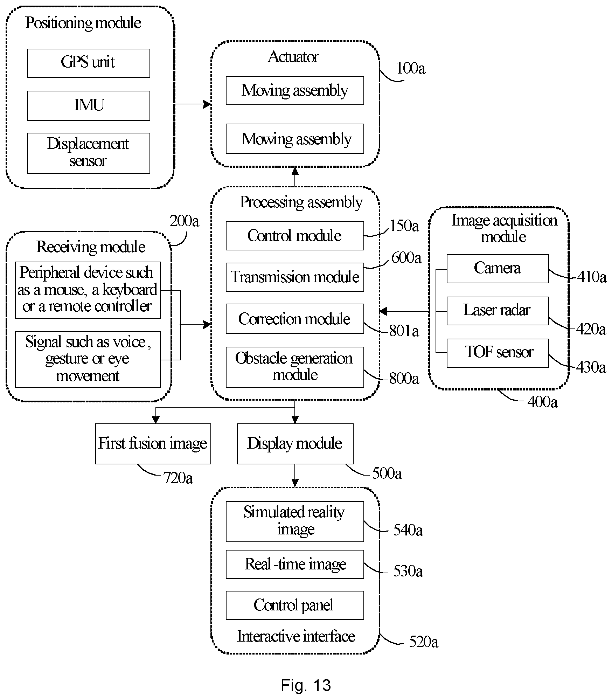

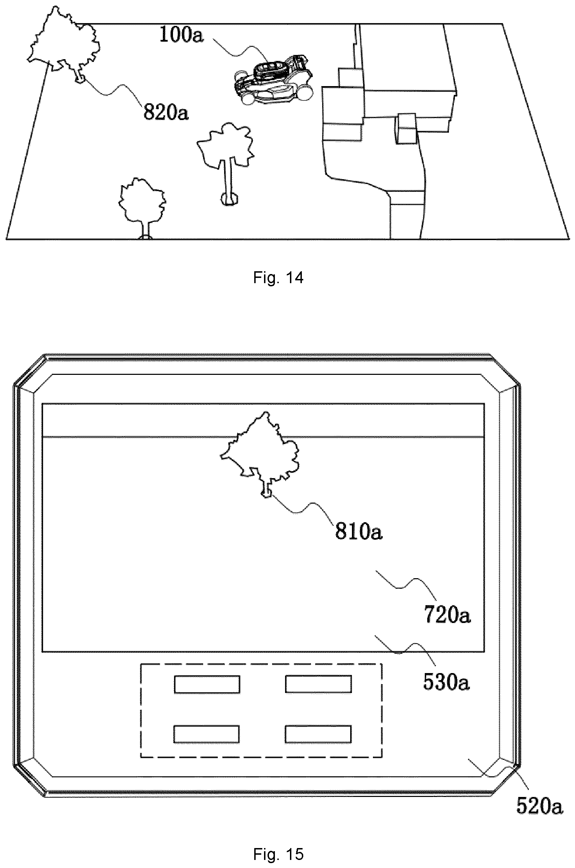

In a second implementation of the present application, referring to FIGS. 13 and 14, a processing assembly 180 includes an image acquisition module 400a and an obstacle generation module 800a. The image acquisition module 400a includes one or a combination of an image sensor, a laser radar 420a, an ultrasonic sensor, a camera 410a, and a time-of-flight (TOF) sensor 430a. The ultrasonic sensor transmits an ultrasonic wave, detects whether there is an obstacle in a mowing area according to a return time of the ultrasonic wave, and records position information of the obstacle. The laser radar 420a transmits a laser and detects the obstacle in the mowing area according to a reflection time of the laser. The image sensor analyzes a shape and a color of the acquired image, and analyzes a corresponding image conforming to the obstacle by an algorithm. The obstacle generation module 800a fuses obstacle detection information of the mowing area acquired by the image acquisition module 400a into a real-time image 530a or a simulated scene image 540a, and generates a first virtual obstacle identifier 810a in a corresponding position in the mowing area in the real-time image 530a or the simulated scene image 540a by the display module 500a so as to generate a first fusion image 720a. The first fusion image 720a is the real-time image 530a or the simulated scene image 540a including the first virtual obstacle identifier 810a. A sending module 600a transmits information of the first fusion image 720a to a control module 150a. The control module 150a controls an actuating mechanism 100a to avoid a virtual obstacle when the actuating mechanism 100a is operated to mow according to the information of the first fusion image 720a. A data operation processor establishes a pixel coordinate system and an actuating mechanism 100a coordinate system, and calculates, by identifying a pixel coordinate of the first virtual obstacle identifier 810a added by the user on the first fusion image 720a, the first virtual obstacle identifier 810a in the obstacle to convert position information of the first virtual obstacle identifier into the position information of the actual obstacle 820a in a coordinate conversion method. The control module 150a controls the actuating mechanism 100a to avoid the obstacle 820a during the operation. In this manner, the user can add the first virtual obstacle identifier 810a in the real-time image 530a or the simulated scene image 540a, and the self-moving mowing system can identify and avoid the obstacle, thereby facilitating the operation of the user and accurately adding obstacle information into the mowing area.

In another implementation, referring to FIG. 15, the obstacle generation module 800a generates a virtual obstacle identifier corresponding to the obstacle in the real-time image 530a or the simulated scene image 540a according to an instruction input by the user so as to form the first fusion image 720a. The user sets the virtual obstacle identifier in the real-time image 530a or the simulated scene image 540a according to an obstacle position in the actual mowing area or a position of an area that does not need to be mowed by the receiving module 200a as an identifier of an area that the actuating mechanism 100a does not need to operate and needs to avoid during the actual mowing operation.

The obstacle generation module 800a presets, for a possible obstacle such as a stone and a tree in the mowing area, an obstacle model such as a stone model, a tree model and a flower model, for the user to select. The user determines, by the simulated scene image 540a or the real-time image 530a simulating a real state on an interactive interface 520a, according to environmental characteristics displayed by the simulated scene image 540a or the real-time image 530a, in conjunction with an actual state of the mowing area, a position corresponding to the obstacle in the simulated scene image 540a or the real-time image 530a, and selects a type, a position and a size of the obstacle in the simulated scene image 540a or the real-time image 530a by the receiving module 200a. After the user inputs related information, an image processor 320 generates a corresponding simulated obstacle 640 in the generated simulated scene image 540a, and the control module 150a controls the actuating mechanism 100a to avoid the obstacle during the operation.

The obstacle generation module 800a generates the virtual obstacle identifier corresponding to the obstacle in the real-time image 530a or the simulated scene image 540a so as to form the first fusion image 720a. The first fusion image 720a includes a size, a shape, and position information of the virtual obstacle identifier. The sending module 600a transmits the information of the first fusion image 720a to the control module 150a, so that the control module 150a controls the actuating mechanism 100a to avoid the virtual obstacle identifier when the actuating mechanism 100a mows in the mowing area according to the information of the first fusion image 720a so as to meet the requirement of avoiding the obstacle.

The first fusion image 720a may further include a first virtual boundary 710a. The boundary generation module 700a generates the first virtual boundary corresponding to a mowing boundary in the real-time image 530a or the simulated scene image 540a by calculating characteristic parameters, so that the control module 150a controls, according to the information of the first fusion image 720a, the actuating mechanism 100a to operate in a first mowing area corresponding to a first virtual mowing area within the first virtual boundary 710a and outside the virtual obstacle identifier, thereby limiting the actuating mechanism 100a to operate within the first boundary and avoiding the virtual obstacle identifier. The obstacle may be an object occupying a space, such as a stone or an article, or may be an area of flowers or special plants that does not need to be mowed. The obstacle may also be understood as a required area of the user which does not need to be operated within the current first virtual boundary 710a, and may be formed with a special pattern or shape to meet the requirement of beautifying the lawn of the user.

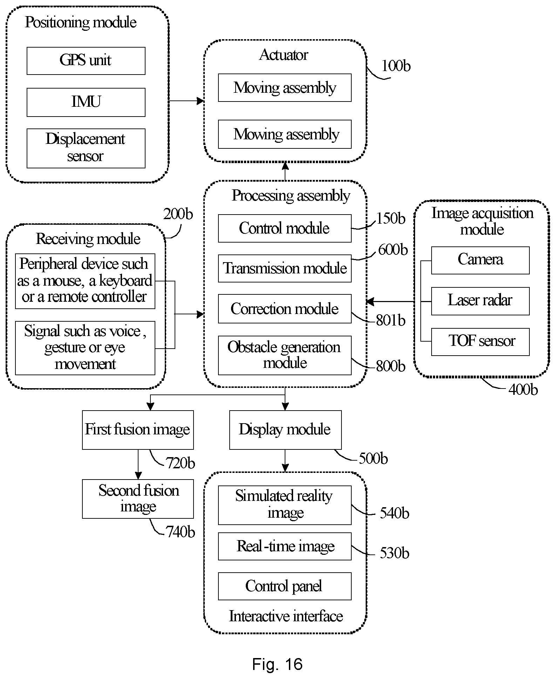

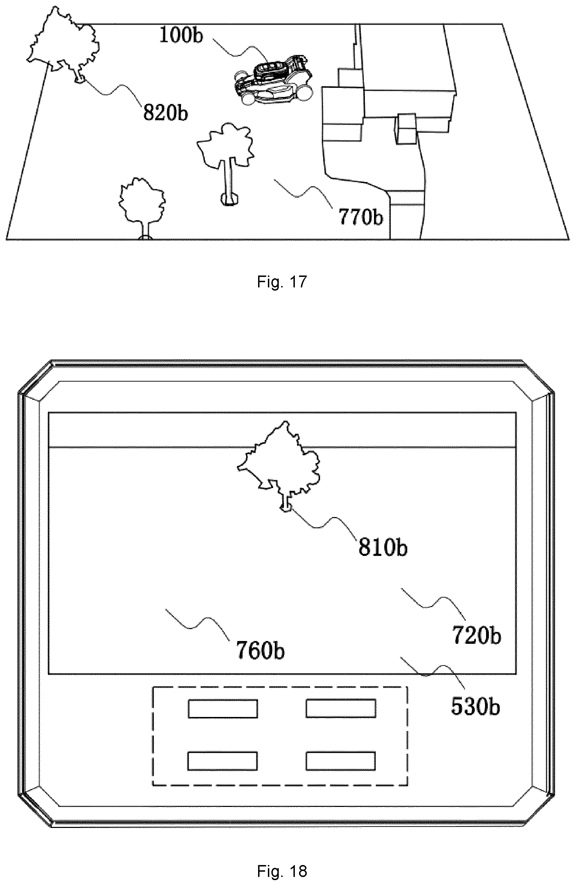

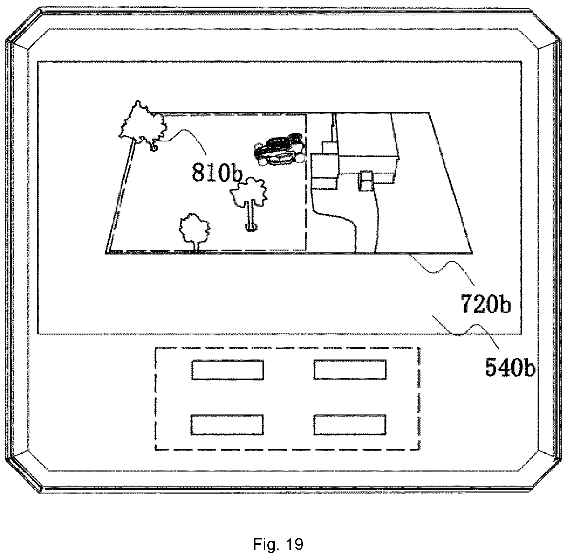

In a third implementation of the present application, referring to FIGS. 16 to 19, the obstacle generation module 800b generates a first virtual obstacle 810b corresponding to a mowing obstacle in a real-time image 530b or a simulated scene image 540b by calculating characteristic parameters so as to form a first fusion image 720b. The first fusion image 720b includes a first virtual mowing area 760b and the first virtual obstacle 810b in the first virtual mowing area 760b. The first virtual mowing area 760b corresponds to an actual first mowing area 770b. The object distribution and position in the first virtual mowing area 760b correspond to the object distribution and position in the actual first mowing area 770b correspond, and the first virtual mowing area 760b is a mowing area that needs to be operated by an actuating mechanism 100b. The obstacle generation module 800b is provided with an obstacle analysis algorithm. An obstacle 820b in a to-be-mowed area is detected by an image acquisition module 400b, and the first virtual obstacle 810b is generated in a position corresponding to the mowing obstacle 820b in the real-time image 530b or the simulated scene image 540b, so that the first virtual obstacle 810b is fused with the real-time image 530b or the simulated scene image 540b to generate the first fusion image 720b. The real-time image 530b or the simulated scene image 540b is displayed by the display module 500b. The first fusion image 720b includes the first virtual obstacle 810b. At least one actual obstacle 820b corresponding to the first virtual obstacle 810b is the mowing obstacle 820b detected by the obstacle generation module 800b in the current environment. A sending module 600b is electrically or communicatively connected to a control module 150b. The sending module 600b transmits information of the first fusion image 720b to the control module 150b, and the information of the first fusion image 720b includes position information of the first virtual obstacle 810b. The control module 150b controls the actuating mechanism 100b to mow in the actual first mowing area 770b corresponding to the first virtual mowing area 760b according to the position information of the first virtual obstacle 810b, and controls the actuating mechanism 100b to operate only within an actual first obstacle corresponding to the first virtual obstacle 810b according to the detected position of the actuating mechanism 100b.

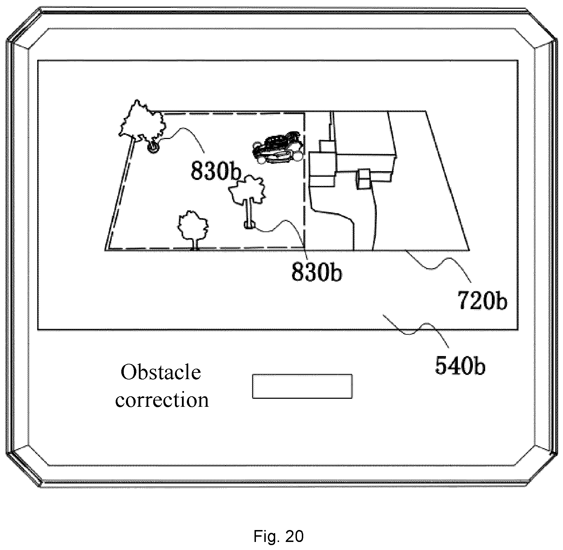

Optionally, referring to FIG. 20, after the obstacle generation module 800b generates the first fusion image 720b, a receiving module 200b inquires, by a display interface, whether a user needs to correct information of the first virtual obstacle 810b in the current first fusion image 720b, and receives information input by the user of whether the first virtual obstacle 810b in the first fusion image needs to be corrected. In a case where the user selects to correct the information of the first fusion image 720b, the user manually inputs an instruction to correct the first virtual obstacle 810b, thereby generating a second virtual obstacle 830b designated by the user, so that the user corrects the first virtual obstacle 810b in the displayed first fusion image 720b by a control panel in combination with the mowing obstacle as actually needed. A processing assembly 180 further includes a correction module 801. The correction module 801 is configured to receive, when the user inputs information that the first virtual obstacle 810b needs to be corrected, a user instruction to correct the first virtual obstacle 810b to generate a second virtual obstacle 830b in the real-time image 530b or the simulated scene image 540b so as to form a second fusion image 740b.

The second fusion image 740b includes a corrected second virtual obstacle 830b and the second virtual obstacle 830b corresponds to the at least one actual obstacle 820b that the user needs to avoid. The control module 150b controls the actuating mechanism 100b to mow in the actual first mowing area 770b corresponding to the first virtual mowing area 760b according to position information of the second virtual obstacle 830b, and controls the actuating mechanism 100b to operate only within an actual second obstacle corresponding to the second virtual obstacle 830b according to the detected position of the actuating mechanism 100b. The control module 150b controls the actuating mechanism 100b to avoid the actual obstacle corresponding to the second virtual obstacle 830b when the actuating mechanism 100b is mowing according to the information of the first fusion image 720b, so that the user can conveniently adjust the avoidance operation of the self-moving mowing system during the operation. The obstacle may be an object occupying a space such as a stone or an article, or may be an area of flowers or special plants that does not need to be mowed.

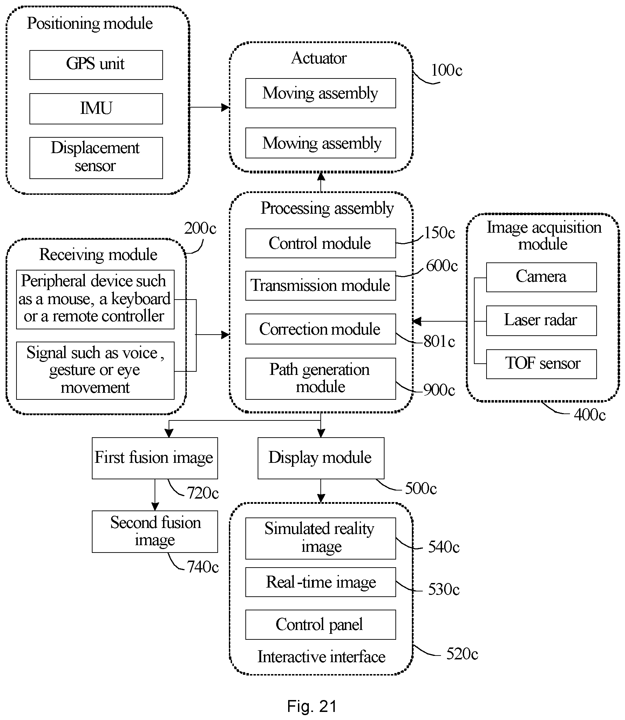

In a fourth implementation of the present application, referring to FIG. 21, a processing assembly 180 includes a path generation module 900c configured to generate a moving path 910c in a real-time image 530c or a simulated scene image according to an instruction input by a user so as to form a first fusion image 720c. The path generation module 900c is provided with a preset mowing path mode. For example, the mowing path mode is a bow-shaped path, and an actuating mechanism 100c is controlled to operate within a boundary in a reciprocating progressive manner; or the mowing path mode is a rectangular-ambulatory-plane path, and the actuating mechanism 100c is controlled to operate toward a center in a surrounding and progressive manner.

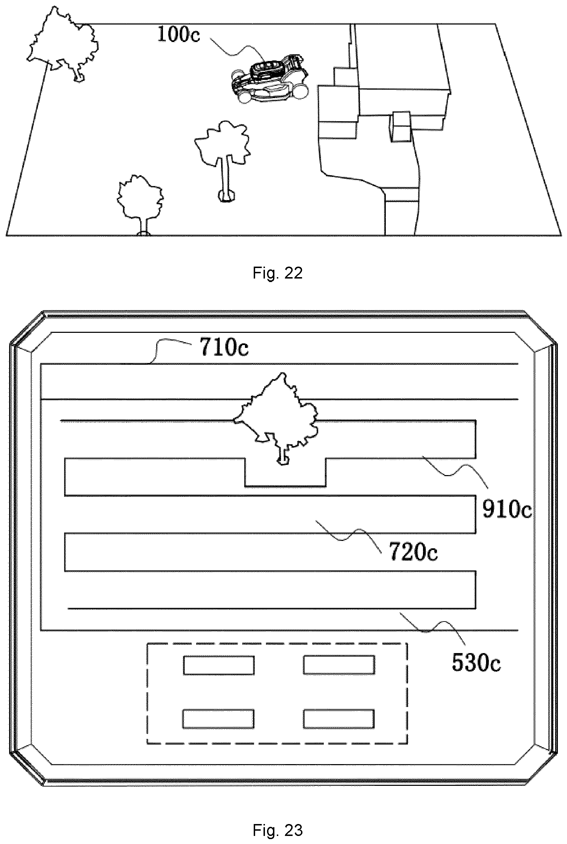

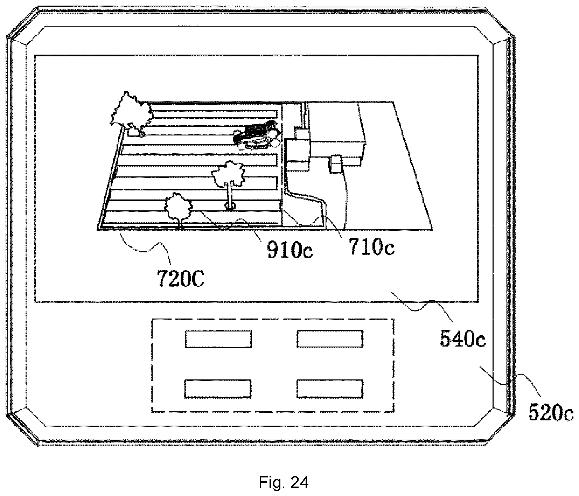

Referring to FIG. 22, the processing assembly 180 includes a boundary generation module 700c. The user transmits a start-up instruction. The boundary generation module 700c is provided with a boundary analysis algorithm to analyze a mowing boundary of a to-be-mowed area by a color, a grass height and a shape in the real-time image 530c or the simulated scene image, so as to generate a first virtual boundary 710c in a position corresponding to the mowing boundary in the real-time image 530c or the simulated scene image. Referring to FIGS. 23 and 24, the path generation module 900c mounts a preset algorithm within the generated first virtual boundary 710c to design the moving path 910c within the mowing area, and calculates, according to a corresponding position coordinate of the generated walking path 910c in an actuating mechanism 100c coordinate system, a corresponding pixel coordinate in a pixel coordinate system, thereby displaying the generated moving path 910c in the real-time image 530c or the simulated scene image, and fusing the generated moving path 910c into the real-time image 530c or the simulated scene image to generate the first fusion image 720c. A sending module 600c transmits the first fusion image 720c to the control module 150c. The control module 150c controls a moving assembly 110c to move along the moving path 910c in the first fusion image 720c and mow in the mowing area.

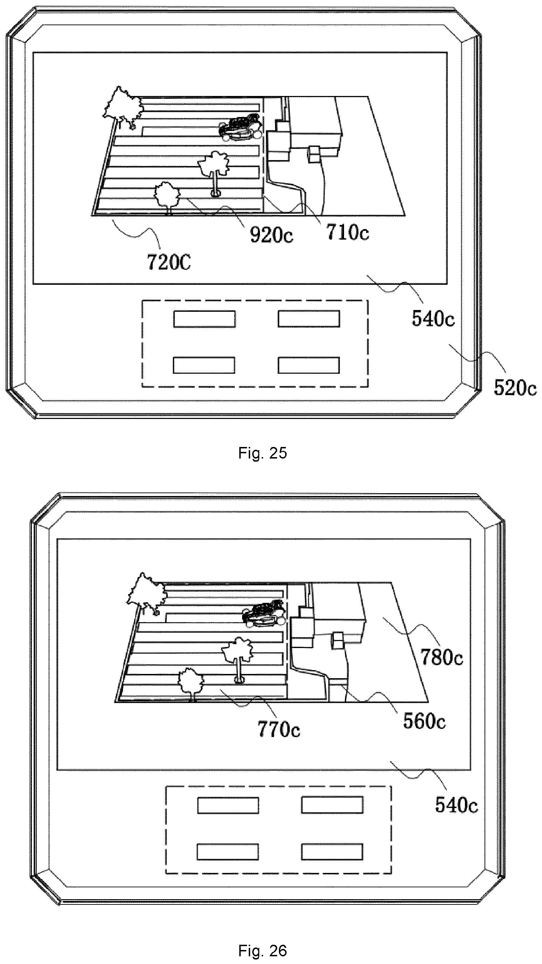

Optionally, referring to FIG. 25, the processing assembly 180 further includes a correction module 801c. The user may correct the moving path 910c in the first fusion image 720c by a receiving module 200c and correct the first fusion image 720c generated by the path generation module 900c by the correction module 801c. The generated moving path 910c is corrected on the first fusion image 720c by an interactive interface 520c. Path deleting is performed by selecting a part of a path to delete, and a new path is added by adding a line segment to the first fusion image 720c. The correction module 801c reads a pixel coordinate set of the path selected or added by the user, converts the pixel coordinate set into an actuating mechanism coordinate set according to the preset algorithm, and projects the actuating mechanism coordinate set to a position corresponding to the mowing area, thereby analyzing a moving control instruction and a mowing control instruction for the actuating mechanism 100c according to the positioning tracking of the actuating mechanism 100c, so that the actuating mechanism 100c moves and mows along the moving path 910c corrected by the user.

In another implementation, the path generation module 900c includes a preset algorithm for calculating and generating a first moving path 910c according to characteristic parameters of the mowing area, and the first moving path 910c is displayed in a real-time image 530c or a simulated scene image by a display module 500c. The path generation module 900c automatically calculates and generates the first moving path 910c according to acquired mowing boundary information and mowing area information. The path generation module 900c is configured to generate the first moving path 910c such as a bow-shaped path, a rectangular-ambulatory-plane path or a random path according to the characteristic parameters of the mowing area. The first moving path 910c to be followed by the mowing in the corresponding mowing area is displayed to a user in the real-time image 530c or the simulated scene image. A receiving module 200c receives information input by the user of whether the first moving path 910c in a first fusion image 720c needs to be corrected, the user selects to correct and inputs a correction instruction by the receiving module 200c to delete part of the line segment or area from the first moving path 910c, and add part of the line segment or area to the first moving path 910c so as to generate a second moving path 920c in the real-time image 530c or the simulated scene image. The correction module 801c identifies the correction instruction of the user, and fuses a coordinate of the second moving path 920c into the real-time image 530c or the simulated scene image so as to generate a second fusion image 740c. A sending module 600c transmits information of the second fusion image 740c to a control module 150c, and the control module 150c controls, according to the information of the second moving path 920c, an actuating mechanism 100c to move and operate along an actual path in the mowing area corresponding to the second moving path 920c.

In another implementation, the path generation module 900c generates a preset path scrubber such as a rectangular-ambulatory-plane path scrubber, a bow-shaped path scrubber and a linear path scrubber for a user to select. The path generation module 900c forms a selectable path scrubber on an interactive interface 520c, and the user selects a corresponding path scrubber and scrubs an area expected to be operated by an actuating mechanism 100c in the real-time image 530c or the simulated scene image, thereby generating a rectangular-ambulatory-plane path, a bow-shaped path and a linear path in the corresponding area so as to generate the corresponding moving path 910c in the real-time image 530c or the simulated scene image. The control module 150c controls the actuating mechanism 100c to move and operate along the actual path in the mowing area corresponding to the moving path 910c.

In another manner, the path generation module 900c may receive a graph such as a pattern and a word transmitted by the user by the receiving module 200c, and calculate and generate the corresponding moving path 910c according to the graph. The control module 150c controls the actuating mechanism 100c to move and mow according to the generated moving path 910c so as to print a mowing trace of the pattern transmitted by the user in the mowing area, thereby achieving a print mowing purpose, and enriching the appearance type of the lawn.

In the above implementations, when the boundary generation module 700 generates the virtual boundary, the path generation module 900c generates the virtual obstacle identifier and the obstacle generation module 800b generates the moving path 910c, the subsequent operation state of the actuating mechanism and the mowing area state after the mowing operation is completed can be previewed by an actuating mechanism model in the real-time image or the simulated scene image displayed by the display module, so that the user can know the subsequent mowing state and the mowing effect of the actuating mechanism under the current setting in advance. For example, the user can preview, by the real-time image or the simulated scene image, the mowing operation and the mowing effect of the self-moving mowing system to avoid the first virtual obstacle identifier, so that the user can expediently adjust and set the self-moving mowing system in time.

The user determines, by the simulated scene image 540c or the real-time image 530c simulating a real state on the interactive interface 520c, according to environmental characteristics displayed by the simulated scene image 540c or the real-time image 530c, in conjunction with an actual state of the mowing area, a position corresponding to the obstacle in the simulated scene image 540c or the real-time image 530c, and selects, by the receiving module 200c, a type, a position and a size of the obstacle in the simulated scene image 540c or the real-time image 530c. After the user inputs related information, the image processor generates a corresponding simulated obstacle in the generated simulated scene image 540c, and the control module 150c controls the actuating mechanism 100c to avoid the obstacle during the operation.

Referring to FIG. 26, the processing assembly 180 further includes a guide channel setting module. The guide channel setting module is configured to control the interactive interface 520c projected by a projection device 510 to generate a guide channel setting button or a guide channel setting interface, and the user adds a virtual guide channel identifier 560c to the simulated scene image 540c or the real-time image 530c by the guide channel setting module. A to-be-operated area of the user may have multiple relatively independent operation areas, such as front and rear yards of the user's yard, so that the user can guide, by adding the virtual guide channel identifier 560c between the two independent operation areas, the actuating mechanism 100c to move from an operation area to another operation area via a guide channel required by the user. Exemplarily, the self-moving mowing system detects the mowing area, and in a case where there are multiple relatively independent operation areas in the operation environment, the self-moving mowing system identifies and generates a corresponding first virtual sub-mowing area 770c and a corresponding second virtual sub-mowing area 780c, or the user selects a target operation area, and selects at least the first virtual sub-mowing area 770c and the second virtual sub-mowing area 780c through the simulated scene image 540c. The guide channel setting module is configured to receive a virtual guide channel between the first virtual sub-mowing area 770c and the second virtual sub-mowing area 780c set by the user, and the virtual guide channel is configured to guide the actuating mechanism 100c in a moving path 910c between a first sub-mowing area corresponding to the first virtual sub-mowing area 770c and a second sub-mowing area corresponding to the second virtual sub-mowing area 780c. The user selects the corresponding virtual guide channel identifier 560c in the simulated scene image 540c according to a movement channel of the actuating mechanism 100c between the first mowing area and the second mowing area as needed, and the control module 150c controls and guides the actuating mechanism 100c to proceed according to the virtual guide channel identifier 560c integrated in the simulated scene image.

The self-moving mowing system further includes a detection device configured to detect an operation state of the actuating mechanism 100c, such as machine parameters, operation modes, machine failure conditions, and warning information of the actuating mechanism 100c. The display module may also display the machine parameters, the operation modes, the machine failure conditions and the warning information of the actuating mechanism by the interactive interface, and the data operation processor 310 calculates display information and controls the projection device to dynamically react the machine information in real time, which is convenient for the user to control and obtain the operation state of the actuating mechanism.

To better detect the operation state of the actuating mechanism, the self-moving mowing system further includes a voltage sensor and/or a current sensor, a rainfall sensor, and a boundary identification sensor. In general, the above sensors may be disposed within the actuating mechanism, and the voltage sensor and the current sensor are configured to detect a current value and a voltage value during the operation of the actuating mechanism to analyze current operation information of the actuating mechanism. The rainfall sensor is configured to detect the rainwater condition of the environment of the actuating mechanism. The boundary identification sensor is configured to detect a boundary of the operation area, and may be a sensor matched with a boundary electron buried line, an image-capturing device configured to acquire environmental information by capturing, or a positioning device.

Optionally, the rainfall sensor detects current rainfall information, and the image sensor calculates to simulate corresponding rain scene and rainfall size in the generated simulated scene image. Surrounding environment and height information of the actuating mechanism are acquired by the detection device such as a laser radar, a camera, and a state sensor, and displayed in the simulated scene image correspondingly. Optionally, a capacitive sensor is configured to detect load information of a mowing blade, thereby simulating grass height information after the actuating mechanism is operated.

In the above implementations, the processing assembly 180 is communicatively connected to the actuating mechanism, and at least part of the structure of the processing assembly 180 may be disposed within the actuating mechanism, or may be disposed outside the actuating mechanism, so as to transmit a signal to a controller of the actuating mechanism to control the operation of an output motor and a moving motor, thereby controlling the moving and the mowing state of the actuating mechanism.

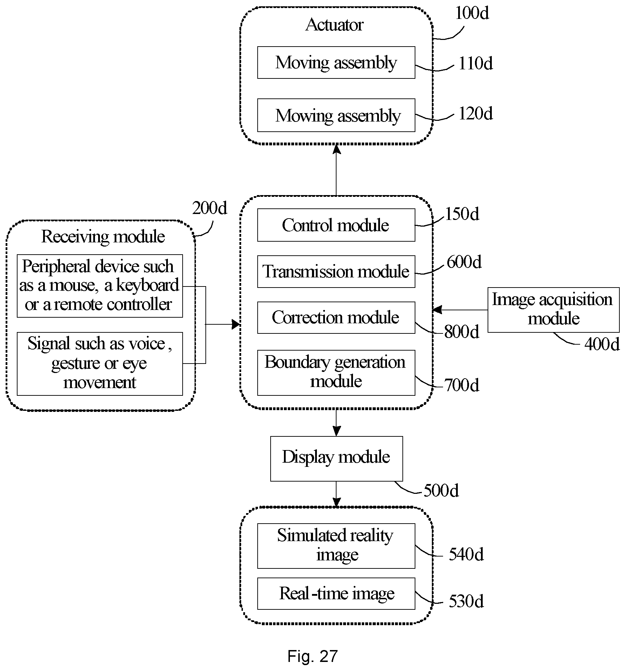

In a fifth implementation of the present application, referring to FIG. 27, an outdoor self-moving device is provided. The outdoor self-moving device, which may be a snow sweeper, includes: an actuating mechanism 100d including a moving assembly 110d configured to achieve a moving function and a working assembly configured to achieve a preset function; a housing configured to support the actuating mechanism 100d; an image acquisition module 400d capable of acquiring a real-time image 530d including at least part of a working area and at least part of a working boundary; a display module 500d electrically or communicatively connected to the image acquisition module 400d, where the display module 500d is configured to display the real-time image 530d or a simulated scene image 540d generated according to the real-time image 530d; a boundary generation module 700d configured to generate a first virtual boundary corresponding to the working boundary in the real-time image 530d by calculating characteristic parameters so as to form the first fusion image; a receiving module 200d configured to receive information input by a user of whether the first virtual boundary in the first fusion image needs to be corrected; a correction module 801d configured to receive, when the user inputs information that the first virtual boundary needs to be corrected, a user instruction to correct the first virtual boundary to generate a second virtual boundary 730d in the real-time image 530d or the simulated scene image 540d so as to form a second fusion image; a sending module 600d configured to transmit the first fusion image that does not need to be corrected or the corrected second fusion image; and a control module 300d electrically or communicatively connected to the sending module 600d where the control module 300d is configured to control the actuating mechanism 100d to operate within the first virtual boundary or the second virtual boundary 730d.

Optionally, the boundary generation module 700d is configured to generate the first virtual boundary corresponding to the working boundary in the real-time image 530d by calculating the characteristic parameters so as to form the first fusion image; the sending module 600d is configured to transmit the first fusion image; and the control module 300d is electrically or communicatively connected to the sending module 600d, and configured to control the actuating mechanism 100d to operate within the first virtual boundary.

Optionally, the outdoor self-moving device further includes an obstacle generation module configured to generate a virtual obstacle identifier corresponding to an obstacle in the real-time image 530d according to an instruction input by the user so as to form the first fusion image; the image acquisition module 400d is configured to acquire a real-time image 530d including at least a part of the working area and at least one obstacle located within the working area, and is electrically or communicatively connected to the sending module 600d; and the control module 300d is configured to control the actuating mechanism 100d to avoid a virtual obstacle in the first fusion image.

Optionally, the obstacle generation module is configured to generate a first virtual obstacle identifier corresponding to the obstacle in the real-time image 530d by calculating the characteristic parameters so as to form the first fusion image; and the control module 300d is configured to control the actuating mechanism 10d to avoid the virtual obstacle in the first fusion image.

Optionally, the obstacle generation module is configured to generate the first virtual obstacle identifier corresponding to the obstacle in the real-time image 530d or the simulated scene image 540d by calculating characteristic parameters so as to form the first fusion image; the receiving module 200d is configured to receive information input by the user of whether the first virtual obstacle identifier in the first fusion image needs to be corrected; the correction module 801d is configured to receive, when the user inputs information that the first virtual obstacle identifier needs to be corrected, the user instruction to correct the first virtual obstacle identifier so as to generate a second virtual obstacle identifier in the real-time image 530d or the simulated scene image 540d so as to form a second fusion image; the sending module 600d is configured to transmit the first fusion image that does not need to be corrected or the corrected second fusion image; and the control module 300d is electrically connected or communicatively connected to the sending module 600d, where the control module 300d is configured to control the actuating mechanism 100d to avoid the first virtual obstacle identifier in the first fusion image or the second virtual obstacle identifier in the second fusion image.

Optionally, the boundary generation module is configured to generate the first virtual obstacle identifier in the real-time image 530d or the simulated scene image 540d according to the instruction input by the user to form the first fusion image; the sending module 600d is configured to transmit the first fusion image; and the control module 300d is electrically or communicatively connected to the sending module 600d, and configured to control the actuating mechanism 100d to avoid the first virtual obstacle identifier in the first fusion image.

Optionally, a path generation module is configured to generate a moving path in the real-time image 530d or the simulated scene image 540d according to the instruction input by the user so as to form the first fusion image; the sending module 600d is configured to transmit the first fusion image; and the control module 300d is electrically or communicatively connected to the sending module 600d, and is configured to control a moving assembly 110d to move along the moving path in the first fusion image.

Optionally, the path generation module is configured to generate a first moving path in the real-time image 530d or the simulated scene image 540d by calculating characteristic parameters in the mowing area so as to form the first fusion image; the receiving module 200d is configured to receive information input by the user of whether the first moving path in the first fusion image needs to be corrected; the correction module 801d is configured to receive, when the user inputs information that the first moving path needs to be corrected, the user instruction to correct the first moving path to generate a second moving path in the real-time image 530d or the simulated scene image 540d so as to form a second fusion image; the sending module 600d is configured to transmit the first fusion image that does not need to be corrected or the corrected second fusion image; and the control module 300d is electrically or communicatively connected to the sending module 600d, and is configured to control the moving assembly 110d to move along the first moving path in the first fusion image or the second moving path in the second fusion image.

## Claims

1. A self-moving mowing system, comprising:
a main body, comprising a housing;
a mowing element connected to the main body and configured to cut vegetation;
an output motor configured to drive the mowing element;
road wheels connected to the main body;
a drive motor configured to drive the road wheels to rotate;
an image acquisition module capable of acquiring a real-time image comprising at least part of a mowing area and at least one obstacle located within the mowing area;
a display module electrically or communicatively connected to the image acquisition module, wherein the display module is configured to display the real-time image or a simulated scene image generated according to the real-time image;
an obstacle generation module configured to generate, by calculating characteristic parameters, a first virtual obstacle identifier corresponding to the at least one obstacle in the real-time image or the simulated scene image so as to form a first fusion image;
a receiving module configured to receive information input by a user of whether the first virtual obstacle identifier in the first fusion image needs to be corrected;
a correction module configured to receive, when the user inputs information that the first virtual obstacle identifier needs to be corrected, a user instruction to correct the first virtual obstacle identifier to generate a second virtual obstacle identifier in the real-time image or the simulated scene image so as to form a second fusion image;
a sending module configured to transmit the first fusion image that does not need to be corrected or the corrected second fusion image; and
a control module electrically or communicatively connected to the sending module, wherein the control module is configured to control the main body to avoid the first virtual obstacle identifier in the first fusion image or the second virtual obstacle identifier in the second fusion image.

2. The self-moving mowing system of claim 1, wherein the control module comprises a data operation processor for processing data, and the data operation processor establishes a pixel coordinate system to convert position information of the virtual obstacle identifier to position information of the actual at least one obstacle.

3. The self-moving mowing system of claim 2, wherein the control module further comprises an image processor for image generation and scene modeling, and the image processor generates the simulated scene image according to the real-time image acquired by the image acquisition module.

4. The self-moving mowing system of claim 3, wherein the display module comprises a projection device and an interactive interface, the interactive interface is generated by projection of the projection device, and the simulated scene image or the real-time image is displayed by the interactive interface.

5. The self-moving mowing system of claim 1, wherein the self-moving mowing system further comprises a positioning module, wherein the positioning module comprises one or a combination of a global positioning system (GPS) unit, an inertial measurement unit (IMU) and a displacement sensor, and is configured to acquire position information of the main body and the mowing area.

6. The self-moving mowing system of claim 5, wherein the self-moving mowing system previews, through the real-time image or the simulated scene image, a mowing operation state and a mowing operation effect of the self-moving mowing system evading the first virtual obstacle identifier.

7. A self-moving mowing system, comprising:
an actuating mechanism comprising a mowing assembly configured to achieve a mowing function and a moving assembly configured to achieve a moving function;
a housing configured to support the actuating mechanism;
an image acquisition module capable of acquiring a real-time image comprising at least part of a mowing area and at least one obstacle located within the mowing area;
a display module electrically or communicatively connected to the image acquisition module, wherein the display module is configured to display the real-time image or a simulated scene image generated according to the real-time image;
an obstacle generation module configured to generate, according to an instruction input by a user, a virtual obstacle identifier corresponding to the at least one obstacle in the real-time image or the simulated scene image so as to form a first fusion image;
a sending module configured to send information of the first fusion image; and
a control module electrically or communicatively connected to the sending module, wherein the control module is configured to control the actuating mechanism to avoid the at least one obstacle corresponding to the virtual obstacle identifier in the first fusion image.

8. The self-moving mowing system of claim 7, wherein the display module comprises a projection device for projecting the simulated actual image or the actual image, and the projection device comprises one of a mobile phone screen, a hardware display screen, virtual reality (VR) glasses and augmented reality (AR) glasses.

9. The self-moving mowing system of claim 8, wherein the control module comprises a data operation processor for processing data and an image processor for image generation and scene modeling, and the data operation processor establishes a pixel coordinate system and an actuating mechanism coordinate system to convert position information of the virtual obstacle identifier to position information of the actual at least one obstacle.

10. The self-moving mowing system of claim 8, wherein the obstacle generation module is configured to comprise a preset obstacle model for adding the virtual obstacle identifier, and the preset obstacle model comprises at least one or a combination of a stone model, a tree model, and a flower model.

11. The self-moving mowing system of claim 7, wherein the image acquisition module comprises one or a combination of an image sensor, a laser radar, an ultrasonic sensor, a camera, and a time-of-flight (TOF) sensor.

12. The self-moving mowing system of claim 7, further comprising:
a boundary generation module configured to generate, by calculating characteristic parameters of the real-time image, a first virtual boundary corresponding to a mowing boundary in the real-time image so as to form the first fusion image,
wherein the sending module is configured to send the first fusion image; and
the control module is electrically or communicatively connected to the sending module, and is configured to control the actuating mechanism to operate within the first virtual boundary.

13. The self-moving mowing system of claim 12, further comprising:
a positioning module, wherein the positioning module comprises one or a combination of a global positioning system (GPS) unit, an inertial measurement unit (IMU) and a displacement sensor, and is configured to acquire a real-time position of the actuating mechanism, and control and adjustment of the moving and mowing of the actuating mechanism is achieved by analyzing real-time positioning data of the actuating mechanism.

14. The self-moving mowing system of claim 12, further comprising: a guide channel setting module, wherein the guide channel setting module is configured to receive a virtual guide channel between a first virtual sub-mowing area and a second virtual sub-mowing area set by the user, and the virtual guide channel is configured to guide the actuating mechanism in a moving path between a first sub-mowing area corresponding to the first virtual sub-mowing area and a second sub-mowing area corresponding to the second virtual sub-mowing area.

15. A self-moving mower, comprising:
a main body comprising a housing;
a mowing element connected to the main body and configured to cut vegetation;
an output motor configured to drive the mowing element;
road wheels connected to the main body;
a drive motor configured to drive the road wheels to rotate;
an image acquisition module capable of acquiring a real-time image comprising at least part of a mowing area and at least one obstacle located within the mowing area, and configured to transmit the real-time image to a display module to display the real-time image or a simulated scene image generated according to the real-time image; and
a control module capable of receiving an instruction input by a user to generate a virtual obstacle identifier corresponding to the at least one obstacle in the real-time image or the simulated scene image so as to form a first fusion image, and configured to control an actuating mechanism to avoid the at least one obstacle corresponding to the virtual obstacle identifier in the first fusion image.

16. The self-moving mower of claim 15, wherein the control module comprises a data operation processor for processing data, and the data operation processor is configured to convert position information of the virtual obstacle identifier to position information of the actual at least one obstacle.

17. The self-moving mower of claim 16, wherein the control module further comprises an image processor for image generation and scene modeling, and the image processor generates the simulated scene image according to the real-time image acquired by the image acquisition module.

18. The self-moving mower of claim 15, further comprising:
a positioning module, wherein the positioning module comprises one or a combination of a global positioning system (GPS) unit, an inertial measurement unit (IMU) and a displacement sensor, and is configured to acquire position information of the self-moving mower.

19. The self-moving mower of claim 16, wherein the image acquisition module comprises one or a combination of an image sensor, a laser radar, an ultrasonic sensor, a camera, and a time-of-flight (TOF) sensor.

20. A self-moving mowing system, comprising:
an actuating mechanism comprising a mowing assembly configured to achieve a mowing function and a moving assembly configured to achieve a moving function;
a housing configured to support the actuating mechanism;
an image acquisition module capable of acquiring a real-time image comprising at least part of a mowing area and at least one obstacle located within the mowing area;
a display module electrically or communicatively connected to the image acquisition module, wherein the display module is configured to display the real-time image or a simulated scene image generated according to the real-time image; and
a processing assembly configured to:
generate, according to an instruction input by a user, a virtual obstacle identifier corresponding to the at least one obstacle in the real-time image or the simulated scene image so as to form a first fusion image; and
control the actuating mechanism to avoid the at least one obstacle corresponding to the virtual obstacle identifier in the first fusion image.

21. The self-moving mowing system of claim 20, wherein the processing assembly further comprises:
a receiving module configured to receive information input by the user of whether a first virtual boundary in the first fusion image needs to be corrected;
a correction module configured to receive, when the user inputs information that the first virtual boundary needs to be corrected, a user instruction to correct the first virtual boundary to generate a second virtual boundary in the real-time image or the simulated scene image so as to form a second fusion image;
a sending module configured to send information of the first fusion image that does not need to be corrected or information of the corrected second fusion image; and
a control module electrically or communicatively connected to the sending module, and configured to control the actuating mechanism to operate within the first virtual boundary or the second virtual boundary.

22. The self-moving mowing system of claim 21, wherein the processing assembly further comprises:
a path generation module configured to generate, according to an instruction input by the user, a moving path in the real-time image or the simulated scene image so as to form the first fusion image,
wherein the sending module is configured to transmit the first fusion image; and
the control module is electrically or communicatively connected to the sending module, and is configured to control the moving assembly to move along the moving path in the first fusion image.

23. The self-moving mowing system of claim 22, wherein the path generation module is configured to generate a preset path scrubber, wherein the preset path scrubber comprises at least a rectangular-ambulatory-plane path scrubber, a bow-shaped path scrubber and a linear path scrubber, and the preset path scrubber is configured to generate a rectangular-ambulatory-plane path, a bow-shaped path and a linear path in the mowing area.

24. The self-moving mowing system of claim 20, wherein the processing assembly is further configured to:
generate, by calculating characteristic parameters, a first moving path in the real-time image or the simulated scene image in the mowing area so as to form the first fusion image;
receive information input by the user of whether the first moving path in the first fusion image needs to be corrected;
receive, when the user inputs information that the first moving path needs to be corrected, a user instruction to correct the first moving path to generate a second moving path in the real-time image or the simulated scene image so as to form a second fusion image; and
control the moving assembly to move along the first moving path in the first fusion image or the second moving path in the second fusion image.

25. The self-moving mowing system of claim 20, wherein the processing assembly is further configured to:
receive information input by the user of whether a first virtual boundary in the first fusion image needs to be corrected;
receive, when the user inputs information that the first virtual boundary needs to be corrected, a user instruction to correct the first virtual boundary to generate a second virtual boundary in the real-time image or the simulated scene image so as to form a second fusion image; and
control the actuating mechanism to operate within the first virtual boundary or the second virtual boundary.

26. An outdoor self-moving device, comprising:
an actuating mechanism comprising a moving assembly configured to achieve a moving function and a working assembly configured to achieve a preset function;
a housing configured to support the actuating mechanism;
an image acquisition module capable of acquiring a real-time image comprising at least part of a working area;
a display module electrically or communicatively connected to the image acquisition module, wherein the display module is configured to display the real-time image or a simulated scene image generated according to the real-time image;
a receiving module configured to receive an instruction input by a user;
an obstacle generation module configured to generate, according to the instruction input by the user, a first virtual obstacle identifier in the real-time image or the simulated scene image to form a first fusion image;
a sending module configured to transmit the first fusion image; and
a control module electrically connected or communicatively connected to the sending module, wherein the control module is configured to control the actuating mechanism to avoid the first virtual obstacle identifier in the first fusion image.

27. An outdoor self-moving device, comprising:
an actuating mechanism comprising a moving assembly configured to achieve a moving function and a working assembly configured to achieve a preset function;
a housing configured to support the actuating mechanism;
an image acquisition module capable of acquiring a real-time image comprising at least part of a working area and at least one obstacle located within the working area;
a display module electrically or communicatively connected to the image acquisition module, wherein the display module is configured to display the real-time image or a simulated scene image generated according to the real-time image;
an obstacle generation module configured to generate, by calculating characteristic parameters, a first virtual obstacle identifier corresponding to the at least one obstacle in the real-time image or the simulated scene image so as to form a first fusion image;
a receiving module configured to receive information input by a user of whether the first virtual obstacle identifier in the first fusion image needs to be corrected;
a correction module configured to receive, when the user inputs information that the first virtual obstacle identifier needs to be corrected, a user instruction to correct the first virtual obstacle identifier to generate a second virtual obstacle identifier in the real-time image or the simulated scene image so as to form a second fusion image;
a sending module configured to transmit the first fusion image that does not need to be corrected or the corrected second fusion image; and
a control module electrically connected or communicatively connected to the sending module, wherein the control module is configured to control the actuating mechanism to avoid the first virtual obstacle identifier in the first fusion image or the second virtual obstacle identifier in the second fusion image.
